Europäisches Patentamt

European Patent Office

Office européen des brevets

(11) Veröffentlichungsnummer: **0 192 276**
**B1**

(12) **EUROPÄISCHE PATENTSCHRIFT**

(45) Veröffentlichungstag der Patentschrift:
11.01.89

(51) Int. Cl.⁴: **A01K 1/015**

(21) Anmeldenummer: **86102285.3**

(22) Anmeldetag: **21.02.86**

(54) **Tierstreu.**

(30) Priorität: **21.02.85 DE 3506070**

(43) Veröffentlichungstag der Anmeldung:
**27.08.86 Patentblatt 86/35**

(45) Bekanntmachung des Hinweises auf die Patenterteilung:
**11.01.89 Patentblatt 89/2**

(84) Benannte Vertragsstaaten:
**AT BE CH DE FR GB IT LI LU NL SE**

(56) Entgegenhaltungen:
**EP-A- 0 109 276**
**WO-A-81/02891**
**DE-C- 3 121 403**
**US-A- 4 263 873**

(73) Patentinhaber: **YTONG AG, Hornstrasse 3,
D-8000 München 40(DE)**

(72) Erfinder: **Hums, Dieter, Dr.-Ing., Ferd.-Zink-Strasse 1,
D-8898 Schrobenhausen(DE)**
Erfinder: **Lippe, Klaus F., Klausenweg 10,
D-8899 Gachenbach 1(DE)**

(74) Vertreter: **Patentanwälte Dr. Solf & Zapf,
Zeppelinstrasse 53, D-8000 München 80(DE)**

## Beschreibung

Die Erfindung betrifft eine Tierstreu aus einem körnigen, porösen adsorbierenden Material mit einem pH-Wert über 9, insbesondere aus im wesentlichen aus Calciumsilikathydrat bestehendem Material wie z.B. Gasbeton, die zur Erniedrigung des pH-Wertes mindestens eine chemische Substanz als Geruchsinhibitor in Form eines im Wasser löslichen sauren Salzes enthält.

Eine solche Tierstreu wird z.B. in der DE-C 3 121 403 beschrieben. Die Erniedrigung des pH-Wertes soll eine unangenehme Geruchsentwicklung unterdrücken, wenn die Tierstreu Fäkalien aufnimmt oder aufgenommen hat.

Bisher wurden die Granulate des adsorbierenden Materials zur Erniedrigung des pH-Wertes mit Säuren oder Lösungen saurer Salze getränkt, so daß sich der pH-Wert absenkte. Die Erniedrigung des pH-Wertes hat zum Ziel, die Aufspaltung von Harnsäure, die bei hohem pH-Wert nicht beständig ist, zu vermeiden. Die Aufspaltungsprodukte der Harnsäure bewirken eine Geruchsbelästigung. Bei pH-Werten unter 10 ist die Geruchsbelästigung deutlich geringer und nimmt weiter ab mit sinkenden pH-Werten bis zu pH-Werten von unter 9.

Der Zusatz von gelösten sauren Salzen oder Säuren hat Nachteile. Die Säuren oder Lösungen werden an der Oberfläche der Granulatkörner abgelagert und diffundieren teilweise in das Innere des Materials. Dadurch sinkt der pH-Wert des Materials sofort ab. Durch Diffusionsvorgänge – u.a. unter Einfluß der Restfeuchte im Granulat – werden bei längerer Lagerung aus dem Innern des Korns bzw. aus dem Wandungsmaterial des Korns wiederum Alkaliträger, vor allem aber auch Calciumhydroxid, nachgeliefert. So kommt es im Laufe der Zeit zu einem unerwünschten Wiederanstieg des pH-Wertes und damit verbunden zu einer erheblichen Minderung der Wirkung der Säuren bzw. Lösungen.

Aufgabe der Erfindung ist, eine Tierstreu zur Verfügung zu stellen, deren Geruchsinhibitoren durch längere Lagerung der Tierstreu nicht in ihrer Wirkung beeinträchtigt werden.

Diese Aufgabe wird erfindungsgemäß dadurch gelöst, daß sie als Geruchsinhibitor mindestens ein festes, körniges saures Salz, vorzugsweise ein in Wasser und/oder Urin leicht lösliches, festes körniges saures Salz homogen verteilt beigemischt enthält. Bevorzugt wird ein solches festes, körniges saures Salz beigemischt, das eine pH-Wertabsenkung auf unter 9,3 bis 7,5 bewirkt. Vorzugsweise wird Aluminiumsulfat in körniger Form beigemischt. Vorteilhaft ist, wenn das körnige, poröse adsorbierende Basismaterial mit einem pH-Wert über 9 und das körnige Aluminiumsulfat die folgenden Kornverteilungen aufweisen:

| Basismaterial | Geruchsinhibitor |
|---|---|
| < 5 mm 100 M% | < 2 mm 100 M% |
| < 4 mm 95 M% | < 1 mm 50 M% |
| < 3 mm 65 M% | < 0,1 mm 0,1 M% |
| < 2 mm 40 M% | |
| < 1 mm 15 M% | |
| < 0,09 mm 0,1 M% | |
| M% bedeuten Massenprozente | |

Vorteilhaft ist, wenn das körnige saure Salz in Mengen von 0,5 bis 3 Gew.-% in der Tierstreu vorliegt.

Das Korn des Geruchsinhibitors liegt als Feststoffkörnchen in der Tierstreu vor. Wenn eine Flüssigkeit, z.B. in Form von Tierurin, in die Streu eingebracht wird, löst sich das Körnchen aus z.B. Aluminiumsulfat sofort auf und senkt innerhalb des Bereiches, der durch den Tierurin befeuchtet worden ist, den pH-Wert sehr stark ab und verhindert somit die Geruchsbelästigung.

Durch den Zusatz von sauren festen Salzen in körniger Form, z.B. von Aluminiumsulfatkörnern, wird somit ein lagerstabiles Material erzeugt, bei dem die pH-Wert-Absenkung selektiv nur dort eintritt, wo sie bei Feuchtzugabe in Form von Tierurin erwünscht ist.

Tierstreu mit Geruchsinhibitoren sind seit langem bekannt. Diese Produkte sind mit dem beschriebenen Nachteil behaftet, daß nach längerem Lagern die Geruchsinhibitoren unwirksam werden, wenn der Wirkungsmechanismus auf einer Absenkung des pH-Wertes beruht. Dieses Problem ist ebenfalls seit langem bekannt. Lösungsvorschläge liegen noch nicht vor. Alle bekannten Verfahren zur Erniedrigung des pH-Wertes sehen eine Tränkung des porösen Basismaterials mit Säuren oder Lösungen saurer Salze vor, d.h. der Fachmann hat bisher immer versucht, das Basismaterial möglichst so zu tränken, daß die gesamte Oberfläche auch im Innern der Körner mit den chemischen Substanzen belegt ist. Man ist davon ausgegangen, daß die vollständige Belegung der inneren und äußeren Oberfläche der Körner die Geruchsentwicklung am sichersten vermeidet. Die vorliegende Erfindung geht einen völlig anderen Weg, indem keine Belegung der Oberfläche der Körner des Basismaterials erfolgt, sondern indem eine homogene Mischung zwischen dem Basismaterial und der chemischen Substanz erzeugt wird, so daß überall der Geruchsinhibitor in körniger Form zur Verfügung steht. Die Erfindung sieht demgemäß vor, die pH-Wert-Erniedrigung erst dann zu bewirken, wenn die Fäkalie mit der Tierstreu in Kontakt tritt. Es stehen zu diesem Zeitpunkt ausreichende Mengen des Geruchsinhibitors zur Verfügung, um den pH-Wert abzusenken. Die Absenkung wird auch nicht mehr durch irgendwelche Diffusionsvorgänge beeinträchtigt, Dies ist ein überraschender Effekt, der noch nicht erklärbar ist. Offenbar wird die Diffusion von Alkaliträgern oder Calciumhydroxid aus dem Basismaterial unterdrückt durch das Gemisch, bestehend aus der Fäkalie und dem Geruchsinhibitor.

## Patentansprüche

1. Tierstreu aus einem körnigen, porösen adsorbierenden Material mit einem pH-Wert über 9, insbesondere aus im wesentlichen aus Calciumsilikathydrat bestehendem Material wie z.B. Gasbeton, die zur Erniedrigung des pH-Wertes mindestens eine chemische Substanz als Geruchsinhibitor in Form eines im Wasser löslichen sauren Salzes enhält, dadurch gekennzeichnet, daß sie als Geruchsinhibitor mindestens ein festes, körniges saures Salz, vorzugsweise ein in Wasser und/oder Urin leicht lösliches, festes körniges saures Salz homogen verteilt beigemischt enthält.

2. Tierstreu nach Anspruch 1, dadurch gekennzeichnet, daß sie als festes, körniges saures Salz ein Salz homogen beigemischt enthält, das eine pH-Wert-Absenkung auf unter 9,3 bis 7,5 bewirkt.

3. Tierstreu nach Anspruch 1 und/oder 2, dadurch gekennzeichnet, daß das feste, körnige saure Salz Aluminiumsulfat in körniger Form ist.

4. Tierstreu nach einem oder mehreren der Ansprüche 1 bis 3, dadurch gekennzeichnet, daß das körnige, poröse adsorbierende Basismaterial mit einem pH-Wert über 9 und das körnige saure Salz die folgenden Kornverteilungen aufweisen:

| Basismaterial | Geruchsinhibitor |
|---|---|
| < 5 mm 100 M% | < 2 mm 100 M% |
| < 4 mm 95 M% | < 1 mm 50 M% |
| < 3 mm 65 M% | < 0,1 mm 0,1 M% |
| < 2 mm 40 M% | |
| < 1 mm 15 M% | |
| < 0,09 mm 0,1 M% | |
| M% bedeuten Massenprozente | |

5. Tierstreu nach einem oder mehreren der Ansprüche 1 bis 4, dadurch gekennzeichnet, daß das feste, körnige saure Salz in Mengen von 0,5 bis 3 Gew.-% vorliegt.

## Claims

1. Animal litter of a particulate, porous absorbent material with a pH in excess of 9, in particular of a material consisting substantially of hydrated calcium silicate, eg, foamed concrete, which contains a chemical substance in the form of a water-soluble acid salt as a smell inhibitor to reduce the pH, chatacterised in that a solid particulate salt, preferably a solid particulate acid salt which is readily soluble in water and/or urine, is homogenously mixed with it.

2. Animal litter according to Claim 1, characterised in that it contains as the homogenously mixed solid particulate acid salt a salt which brings the pH value to between 9,3 and 7,5.

3. Animal litter according to Claim 1 and/or 2, characterised in that the solid particulate acid salt is aluminium sulphate in particulate form.

4. Animal litter according to one or more of Claims 1 to 3, characterised in that the particulate porous absorbent base material having a pH value above 9 and the particulate acid salt are according to the following recipe:

| Base Material | Smell Inhibitor |
|---|---|
| < 5 mm 100 M% | < 2 mm 100 M% |
| < 4 mm 95 M% | < 1 mm 50 M% |
| < 3 mm 65 M% | < 0,1 mm 0,1 M% |
| < 2 mm 40 M% | |
| < 1 mm 15 M% | |
| < 0,09 mm 0,1 M% | |

5. Animal litter according to one or more of Claims 1 to 4, characterised in that the solid particulate acid salt is present in the quantity of 0,5 to 3 percent by weight.

## Revendications

1. Litière pour animaux consistant en une matière poreuse et absorbante en granulés ayant un pH supérieur à 9, en particulier une matière consistant sensiblement en un hydrate de silicate de calcium, comme par exemple du béton aéré contenant, pour un abaissement du pH, au moins une substance chimique servant d'inhibiteur d'odeurs sous la forme d'un sel acide soluble dans l'eau, caractérisée par le fait qu'on y ajoute de manière homogène en tant qu'inhibiteur d'odeurs au moins un sel acide, solide sous la forme de granulés, de préférence un sel acide solide sous la forme de granulés et facilement soluble dans l'eau et/ou l'urine.

2. Litière selon la revendication 1, caractérisée en ce qu'elle contient, réparti de manière homogène, un sel acid, solide sous la forme de granulés qui provoque un abaissement du pH en dessous de 9,3 et jusqu'à 7,5.

3. Litière selon la revendication 1 et/ou 2, caractérisée en ce que le sel acide, solide sous la forme de granulés est du sulfate d'aluminium en granulés.

4. Litière selon l'une ou plusieurs des revendications 1 à 3, caractérisée en ce que la matière de base poreuse, absorbante, en granulés et ayant un pH supérieur à 9 et le sel acide en granulés présentent la répartition suivante des granulés:

| Matière de base | Inhibiteur d'odeurs |
|---|---|
| < 5 mm 100 M% | < 2 mm 100 M% |
| < 4 mm 95 M% | < 1 mm 50 M% |
| < 3 mm 65 M% | < 0,1 mm 0,1 M% |
| < 2 mm 40 M% | |
| < 1 mm 15 M% | |
| < 0,09 mm 0,1 M% | |

5. Litière selon l'une ou plusieurs des revendications 1 à 4, caractérisé par le fait que le sel acide, solide sous la forme de granulés est présent à raison de 0,5 à 3% en poids.